# EUROPÄISCHE PATENTSCHRIFT

(11) **EP 2 133 244 B1**
(45) Veröffentlichungstag und Bekanntmachung des Hinweises auf die Patenterteilung: **12.10.2011**
(21) Anmeldenummer: 09007458.4
(22) Anmeldetag: 05.06.2009
(51) Int. Cl.: B60R 21/01

(54) **Verfahren zur prognostischen Bewertung wenigstens eines vorausschauenden Sicherheitssystems eines Kraftfahrzeugs**
Method for prognostic evaluation of at least one anticipatory safety system of a motor vehicle
Procédé d'évaluation pronostique d'au moins un système de sécurité prévisionnel d'un véhicule automobile

(30) Priorität: 10.06.2008 DE 102008027509
(43) Veröffentlichungstag der Anmeldung: 16.12.2009
(73) Patentinhaber: Audi AG, 85045 Ingolstadt (DE)
(72) Erfinder: Sigl, Simon, 5020 Salzburg (AT); Palau, Antoni, 5020 Salzburg (AT); Schramm, Stefan, 85049 Ingolstadt (DE); Roth, Franz, 93336 Altmannstein (DE); Kuhn, Andreas, Dr., 5440 Kuchl-Golling (AT)
(74) Vertreter: Thielmann, Frank

(56) Entgegenhaltungen:
- DE-A1- 10 240 838
- DE-A1- 19 738 611
- DE-A1-102006 044 086
- US-A1- 2006 106 538
- O.J. GIETELINK: "Pre-crash system validation with prescan and vehil" In: IEEEE: "Intelligent vehicles symposium,2004 IEEE" 8. Oktober 2004 (2004-10-08), IEEE , XP002591668 ISBN: 0-7803-8310-9 , Seiten 913-918 * das ganze Dokument *

## Beschreibung

Die Erfindung betrifft ein Verfahren zur prognostischen Bewertung wenigstens eines vorausschauenden Sicherheitssystems eines Kraftfahrzeugs unter Berücksichtigung von statistischen, mehrere Unfälle beschreibenden, insbesondere in einer Datenbank gespeicherten Realunfalldaten.

Die Zahl der Schäden, insbesondere auch der Verletzungen oder gar Tode, im Straßenverkehr, nimmt mit der zunehmenden Zahl der Verkehrsteilnehmer zu. Daher gibt es in vielen Ländern und Ländergemeinschaften Bestrebungen, Sicherheitssysteme für Kraftfahrzeuge zu fördern, die der Unfallvermeidung und/oder der Unfallfolgenminderung dienen. Eine Art dieser Sicherheitssysteme sind die sogenannten vorausschauenden Sicherheitssysteme. Bei diesen wird, insbesondere mit Hilfe von Sensoren, die Fahrzeugumgebung überwacht und auf unfallträchtige Situationen überprüft. Wird eine solche entdeckt, werden entsprechende Gegenmaßnahmen eingeleitet, beispielsweise eine Warnung für den Fahrer ausgegeben oder gar Steuermaßnahmen für das Kraftfahrzeug, etwa eine sicherheitssysteminitiierte Bremsung, eingeleitet.

Häufig ist die Effektivität, insbesondere im Hinblick auf Schäden, eines solchen vorausschauenden Sicherheitssystems in der Planungsphase noch nicht vollständig absehbar. Von einer anderen Betrachtungsrichtung her ist es schwierig, abzuschätzen, welche Anforderungen ein vorausschauendes Sicherheitssystem erfüllen muss, um eine bestimmte Reduzierung von Schäden, insbesondere auch Personenschäden, zu erlauben. Daher ist es heutzutage notwendig, diese vorausschauenden Sicherheitssysteme tatsächlich zu realisieren, um dann, beispielsweise durch Fahrversuche, die häufig weitere hohe Kosten mit sich bringen, zu überprüfen, wie effektiv ein solches vorausschauendes Sicherheitssystem Schäden verhindern kann.

In einem Artikel von O. J. Gietelink et al., "Pre-Crash System Validation with PRESCAN and VEHIL", in: IEEE: "Intelligent Vehicles Symposium, 2004, IEEE", IEEE, XP 002591668, ISBN: 0-7803-8310-9, Seiten 913 - 918, wird ein Pre-Crash-System beschrieben, das Umgebungssensoren, Fahrzeugdynamiksensoren und elektronische Steuerungsfunktionen zum Auslösen von Sicherheitsmaßnahmen nutzt. Unter Verwendung von Sensordaten über den Pfad eines Hindernisses und die abgeschätzte Zeit bis zur Kollision kann mit einer bestimmten Wahrscheinlichkeit vorhergesagt werden, ob eine Kollision bevorsteht. Aus den Sensordaten wird also ein Crash vorhergesagt, woraufhin Crashparameter die Ansteuerung von Sicherheitssystemen beschreiben. Zum Testen solcher Pre-Crash-Systeme wird vorgeschlagen, Simulationen zu verwenden und besonders kritische Szenarien in einem nahezu idealen Versuchsaufbau zu testen.

Der Erfindung liegt daher die Aufgabe zugrunde, ein Verfahren anzugeben, mit dem vorausschauende Sicherheitssysteme bereits in der Planungsphase bezüglich ihrer Effektivität bewertet werden können oder Anforderungen an vorausschauende Sicherheitssysteme bereits in einer Vorplanungsphase ermittelt werden können.

Zur Lösung dieses Problems ist erfindungsgemäß bei einem Verfahren der eingangs genannten Art vorgesehen, dass vorab eine Simulation wenigstens eines realen und/oder auf den Realunfalldaten beruhenden, durch Nominalparameter beschreibbaren Unfalls durchgeführt wird, welche Simulationen zu vorbestimmten Unterzeitpunkten vor einem Unfallzeitpunkt zur Erzeugung wenigstens einer Untersimulation mit wenigstens einem veränderten Simulationsparameter, wobei die Veränderung wenigstens eine Maßnahme zur Unfallvermeidung und/oder Unfallfolgenminderung in dem Kraftfahrzeug beschreibt, unterbrochen wird, und die Ergebnisse der Untersimulation in Abhängigkeit der veränderten Simulationsparameter und der Unterzeitpunkte als Simulationsdatensätze gespeichert werden, wonach für wenigstens einen Unfall aufgrund der Eigenschaften des Sicherheitssystems, insbesondere von Sensoren und/oder Algorithmen, ein Aktionszeitpunkt, zu dem Maßnahmen zur Unfallvermeidung und/oder Unfallfolgenminderung in dem Kraftfahrzeug erfolgen, und die Maßnahmen ermittelt werden,
ein in dem Unterzeitpunkt dem Aktionszeitpunkt und in den veränderten Simulationsparametern den Maßnahmen entsprechender Simulationsdatensatz ausgewählt wird, und
eine Bewertung des Sicherheitssystems durch Vergleich von wenigstens einem den durch den Simulationsdatensatz beschriebenen Simulationsunfall beschreibenden Vergleichsparameter mit einem entsprechenden Nominalparameter erfolgt.

Die durch die Erfindung beschriebene Grundidee ist es also, insbesondere in einer Datenbank gespeicherte Realunfalldaten speziell für eine Untersuchung der Effektivität eines vorausschauenden Sicherheitssystems anhand einer sogenannten inkrementellen Simulation aufzubereiten. Auf diese Weise wird eine Datenbank von Simulationsdatensätzen geschaffen, die für eine Vielzahl vorausschauender Sicherheitssysteme bzw. eine Vielzahl von Anforderungen an vorausschauende Sicherheitssysteme genutzt werden können, um eine verlässliche, auf realen Daten, insbesondere auf Messdaten, basierende Aussage über die Wirksamkeit eines vorausschauenden Sicherheitssystems im Hinblick auf die Unfallvermeidung und/oder Unfallfolgenminderung zu erhalten. Das bedeutet, die Simulationsdatensätze werden vorab zu einem bestimmten Zeitpunkt einmal in einer etwas aufwendigeren Folge von Simulationen, die einige Zeit in Anspruch nehmen kann, erstellt, können jedoch für unterschiedliche Untersuchungen wiederverwertet werden, da Simulationsdatensätze für eine Vielzahl von möglichen Maßnahmen und Zeitpunkten zu ihrer Verwirklichung geschaffen werden.

Datenbanken mit Realunfalldaten, die der wissenschaftlichen Auswertung, insbesondere statistischer Art, von real geschehenen Unfällen dienen, sind bekannt. Häufig enthalten diese Datenbanken bereits über 1000 verschiedene Nominalparameter, die den Zustand des Kraftfahrzeugs vor und bei der Kollision, die Umgebungsbedingungen sowie die Unfallfolgen umfassend beschreiben. An Nominalparametern können beispielsweise die Unfallart in einer bestimmten Klassifizierung, die Ausgangsgeschwindigkeit, die Bremsverzögerung, der Bremsweg, die Kollisionsgeschwindigkeit, die Verletzungs- oder Schadensschwere, der Anstoßpunkt bei einer Kollision, der Straßenzustand oder der Straßenbelag vorgesehen sein. Auf der Grundlage solcher Realunfalldaten, die in vorteilhafter Ausgestaltung des Verfahrens aus einer Datenbank abgerufen werden können, setzt nun das erfindungsgemäße Verfahren an, dass diese insbesondere auch Messdaten umfassenden Daten zielgerichtet auswertet.

Dazu ist nun grundlegend zunächst eine Simulation, die einen Unfall nochmals ablaufen lässt, wenigstens eines realen und/oder auf den Realunfalldaten beruhenden, durch Nominalparameter beschreibbaren Unfalls vorgesehen. Mit besonderem Vorteil, also um eine möglichst breite Streuung von vorhandenen Simulationsdatensätzen zu erhalten, kann die Simulation für alle durch die Realunfalldaten beschriebenen realen Unfälle durchgeführt werden. Es ist jedoch auch denkbar, nicht die Realunfälle an sich zu verwenden, sondern auf den Realunfalldaten beruhende Unfälle, das bedeutet, die Realunfalldaten werden statistisch analysiert, so dass allgemeine Tendenzen solcher Unfälle ermittelt werden können, die zur Erstellung fiktiver, aber besonders realitätsnaher Unfallszenarien führen können.

Die durchzuführende Simulation orientiert sich zunächst ausschließlich an den physikalischen Gegebenheiten, die für den Straßenverkehr üblich sind. Dafür kann als Simulation beispielsweise eine Monte-Carlo-Simulation durchgeführt werden.

Konkret kann vorgesehen sein, dass aus wenigstens einem Nominalparameter eine Unfallklasse ermittelt wird, wobei eine anhand der Unfallklasse ausgewählte Simulationsvorlage anhand wenigstens eines Teils der Nominalparameter unfallspezifisch angepasst wird und als Grundlage für die Simulation dient. In diesem Fall gibt es also Simulationsvorlagen oder "templates", die einen bestimmten Startpunkt für die Simulation für eine bestimmte Unfallklasse wiedergeben, so dass deren Variablen lediglich noch mit entsprechenden, aus den Realunfalldaten erhaltenen Nominalparametern aufgefüllt werden müssen, um die Simulation des Unfalls zu starten. Werden beispielsweise Kollisionen mit Fußgängern betrachtet, kann eine solche Vorlage beispielsweise "Fußgänger von links" sein.

Die Simulation des ursprünglichen Unfalls rekonstruiert folglich das Unfallgeschehen. Um die Simulationsdatensätze zu erhalten, die beschreiben, was zu verschiedenen Zeitpunkten verschiedene Maßnahmen zur Unfallvermeidung und/oder Unfallfolgenminderung bezüglich des Unfalls bewirkt hätten, wird nun eine sogenannte inkrementelle Simulation durchgeführt. Das bedeutet, die Simulation des ursprünglichen, also des realen oder auf den Realunfalldaten beruhenden Unfalls wird zu vorbestimmten Unterzeitpunkten vor dem eigentlichen Unfallzeitpunkt angehalten. Dadurch ist eine gewisse Situation vorgegeben, die aufgrund der physikalischen motivierten Simulation der realen Situation möglichst nahekommt. Ausgehend von dieser Situation als neuen Startpunkt werden nun eine Mehrzahl von Untersimulationen gestartet, die sich von der Simulation des ursprünglichen Unfalls darin unterscheiden, dass zu diesem Unterzeitpunkt erfolgende Maßnahmen zur Unfallvermeidung und/oder Unfallfolgenminderung implementiert werden, das bedeutet, beispielsweise Brems- oder Ausweichvorgänge werden entsprechend in Simulationsparameter umgerechnet in die einzelnen Untersimulationen mit eingegeben. Das Ergebnis dieser Untersimulationen sagt nun aus, welchen Einfluss das Ergreifen dieser Maßnahmen zu diesem Unterzeitpunkt auf das Unfallgeschehen gehabt hätte. Beispielsweise lässt sich aus den entstehenden Simulationsdatensätzen schlussfolgern, ob es überhaupt zu einer Kollision kam, wie die Kollisionsgeschwindigkeit war, usw. Auch die Simulation des ursprünglichen Unfalls wird weitergeführt, um an weiteren Unterzeitpunkten wiederum unterbrochen zu werden, an denen ebenso die Maßnahmen in Untersimulationen implementiert werden können.

Untersuchungen haben gezeigt, dass es ausreicht, ein bestimmtes Zeitintervall vor dem Unfallzeitpunkt in dem ursprünglichen Unfall zu betrachten, da vorausschauende Sicherheitssysteme aufgrund ihrer Fähigkeiten auf ein solches Zeitintervall beschränkt sind. Daher kann vorgesehen sein, dass in einem Zeitintervall unmittelbar vor dem Unfallzeitpunkt liegende äquidistante Unterzeitpunkte verwendet werden. Die Länge des Zeitintervalls kann 3 - 5 Sekunden betragen, wobei sich 4 Sekunden als ideal für heutige vorausschauende Sicherheitssysteme erwiesen hat. Natürlich sind grundsätzlich auch längere oder kürzere Intervalle denkbar. Der Abstand zwischen den Unterzeitpunkten kann 0,01 - 0,2 Sekunden, insbesondere 0,1 Sekunden, betragen. Auch hier sind natürlich Vergröberungen oder Verfeinerungen möglich. Wird die Erzeugung der Untersimulationen auf ein solches sinnvolles Zeitintervall beschränkt, sinkt der Rechenaufwand und es sind dennoch alle notwendige Daten vorhanden.

Die Zahl der Untersimulationen zu jedem Unterzeitpunkt hängt davon ab, wie differenziert man die Maßnahmen betrachten will bzw. wie viele Sätze von Maßnahmen untersucht werden sollen. Grundsätzlich können als Maßnahmen zur Unfallvermeidung und/oder Unfallfolgenminderung beispielsweise ein Bremsvorgang und/oder ein Ausweichen betrachtet werden. Dabei kann ein Bremsvorgang durch eine Veränderung der Bremsverzögerung und/oder ein Ausweichen durch eine Veränderung des Lenkwinkels beschrieben werden. Betrachtet man beispielsweise lediglich zu einem Unterzeitpunkt begonnene Bremsvorgänge, kann beispielsweise vorgesehen sein, Untersimulationen für eine Vollbremsung, eine Bremsung mit 60% der Vollbremsung oder ein einfaches vom Gas gehen, 30% einer Vollbremsung, zu betrachten. Die Gesamtmenge der die Maßnahmen für die einzelnen Untersimulationen beschreibenden Maßnahmenparameter werden im Folgenden als Aktionskonzept bezeichnet. Das Aktionskonzept beschreibt also die Maßnahmen, die eingeleitet werden können, um den Unfall zu verhindern oder die Unfallfolgen zu mindern. Untersimulationen können demnach, wie durch das Beispiel der Bremsverzögerung dargelegt wurde, insbesondere auch für verschiedene Werte der geänderten Simulationsparameter erzeugt werden.

Mit besonderem Vorteil berücksichtigt die Simulation auch das Verhalten anderer Verkehrsteilnehmer, insbesondere eines Kollisionsobjekts bei einem betrachteten Kollisionsunfall, und/oder ein Umgebungsmodell. Auf diese Weise kann der Simulationsvorgang beliebig verfeinert werden und möglichst genau die Realität wiedergeben.

Mit den erhaltenen Simulationsdatensätzen steht nun als ein vorteilhafterweise vielseitig einsetzbares, im Hinblick auf die Bewertung eines vorausschauenden Sicherheitssystems optimiertes Werkzeug, vorzugsweise in Form einer Datenbank, zur Verfügung, mit Hilfe dessen nun die prognostische Bewertung eines vorausschauenden Sicherheitssystem durchgeführt werden kann. Dazu ist nun grundsätzlich zu ermitteln, welcher wenigstens eine Simulationsdatensatz die Eigenschaften des vorausschauenden Sicherheitssystems widerspiegelt. Daher ist im erfindungsgemäßen Verfahren nun vorgesehen, dass für wenigstens einen Unfall aufgrund der Eigenschaften des Sicherheitssystems, insbesondere von Sensoren und/oder Algorithmen, ein Aktionszeitpunkt, zu dem Maßnahmen zur Unfallvermeidung und/oder Unfallfolgenminderung in dem Kraftfahrzeug erfolgen, und die Maßnahmen ermittelt werden. Teil eines vorausschauenden Sicherheitssystems sind häufig Sensoren, die das Umfeld des Kraftfahrzeugs überwachen und deren Messwerte durch Algorithmen im Hinblick auf gefährliche Situationen analysiert werden. Informationen hierzu liegen jedoch vor, nämlich in der Simulation des ursprünglichen Unfalls. Dazu kann nun grundsätzlich vorgesehen sein, dass zur Bestimmung des Aktionszeitpunkts und/oder der Maßnahmen der Simulationsdatensatz des ursprünglichen Unfalls, insbesondere im Hinblick auf die Bestimmung von Sensordaten zu verschiedenen Zeitpunkten, insbesondere den Unterzeitpunkten, bei durch den Simulationsdaten beschriebenen Situationen, berücksichtigt wird. Vorteilhafterweise ist es also möglich, die Simulation des ursprünglichen Unfalls zu jedem Unterzeitpunkt (oder einem anderen Zeitpunkt) zu betrachten, woraus ermittelt werden kann, welche Messdaten ein Sensor des vorausschauenden Sicherheitssystems geliefert hätte. Vorzugsweise können dann die aus dem Simulationsdatensatz gewonnen Sensordaten als Eingangsdaten für einen einen Kollisionsgefahrenwert bestimmenden Algorithmus des Sicherheitssystems verwendet werden. Zu den Unterzeitpunkten oder auch zu beliebigen Zeitpunkten in der Simulation des ursprünglichen Unfalls wird demnach die Reaktion des vorausschauenden Sicherheitssystems ermittelt.

Es kann vorgesehen sein, dass das Sicherheitssystem zur Warnung des Fahrers vor einem bevorstehenden Unfall, insbesondere einer bevorstehenden Kollision, ausgebildet ist, wobei der voraussichtliche Warnzeitpunkt bei der Ermittlung des Aktionszeitpunktes berücksichtigt wird. Dabei kann wiederum der im vorangehenden Absatz genannte Kollisionsgefahrenwert berücksichtigt werden. Denn eine Überschreitung eines Grenzwertes durch den Kollisionsgefahrenwert löst üblicherweise Aktionen des vorausschauenden Sicherheitssystems aus, insbesondere die eben genannte Warnung. Mit der Ermittlung dieses Zeitpunktes, zu dem das vorausschauende Sicherheitssystem den drohenden Unfall erkannt hat (häufig als Klassifizierungszeitpunkt bezeichnet), ist aber der genaue Aktionszeitpunkt noch nicht bekannt, so dass im erfindungsgemäßen Verfahren vorteilhaft weitere Größen berücksichtigt werden können. So kann zunächst vorgesehen sein, dass eine Reaktionszeit eines Fahrers vor einer Maßnahme bei der Bestimmung des Aktionszeitpunktes berücksichtigt wird. Die entsprechende Reaktionszeit des Fahrers kann beispielsweise aus schon vorgenommen oder noch vorzunehmenden Fahrversuchen ermittelt werden.

Weiterhin kann bei der Ermittlung des Warnzeitpunkts eine Latenzzeit des Sicherheitssystems berücksichtigt werden. Es wird demnach nicht unmittelbar der Klassifizierungszeitpunkt als Warnzeitpunkt angenommen, sondern es wird mitberücksichtigt, wie lange im Kraftfahrzeug benötigt wird, um diese Information tatsächlich dem Fahrer anzeigen zu können. Dabei sind beispielsweise Berechnungsvorgänge und auch Ansprechzeiten von Warnmitteln relevant. Die Latenzzeit kann auch durch Simulation oder durch Praxisversuche ermittelt werden.

Für die Algorithmen der vorausschauenden Sicherheitssysteme ist der voraussichtliche Kollisionszeitpunkt häufig ein Anhaltspunkt für die Gefährlichkeit einer Simulation. Daher kann es auch im vorliegenden Verfahren sinnvoll sein, Zeitpunkte, insbesondere also den Aktionszeitpunkt, den Warnzeitpunkt oder auch den Klassifizierungszeitpunkt von dem Kollisionszeitpunkt im ursprünglichen Unfall aus zurückgerechnet zu betrachten. Beispielsweise kann anhand der Realunfalldaten der Kollisionszeitpunkt ermittelt werden, danach aus einer Bremsverzögerung und einer Bremszeit der Zeitpunkt, zu dem ein Fahrer im Realunfall zu bremsen begann, und davon ausgehend eine Zeit, die das vorausschauende Sicherheitssystem als Zeitgewinn durch Maßnahmen zur Unfallvermeidung und/oder Unfallfolgenminderung erwirkt.

Als Alternative zu einer Berechnung des Aktionszeitpunktes kann auch eine auf Tatsachen beruhende Vermutung des Aktionszeitpunktes verwendet werden. Wenn Anforderungen für vorausschauende Sicherheitssysteme formuliert werden sollen, kann gegebenenfalls auch ein Wunschzeitpunkt als Aktionszeitpunkt bzw. Warnzeitpunkt vorgegeben werden.

Die Maßnahmen können aus Daten von Fahrversuchen ermittelt werden. Dies gilt insbesondere, wenn Maßnahmen manuell von einem Fahrer ausgelöst werden. Handelt es sich um automatisch ausgelöste Maßnahmen des vorausschauenden Sicherheitssystems, beispielsweise eine automatisch eingeleitete Bremsung oder ein automatisch eingeleiteter Ausweichvorgang, so können diese Maßnahmen auch, wie bereits oben dargestellt, unter Berücksichtigung des Simulationsdatensatzes des ursprünglichen Unfalls, der entsprechend auf die Sensoren angewandt werden kann, ermittelt werden. Auch eine Kombination der Ermittlungsmethoden ist selbstverständlich denkbar.

Insbesondere bei Ermittlung von Maßnahmen aus Daten von Fahrversuchen ist es vorteilhaft möglich, dass eine Wahrscheinlichkeitsverteilung verschiedener Maßnahmen oder Maßnahmenabfolgen bestimmt wird, wobei die den Maßnahmen entsprechenden Simulationsparameter entsprechend gewichtet berücksichtigt werden, insbesondere eine gewichtete Ermittlung durchgeführt wird. Beispielsweise kann bekannt sein, dass eine bestimmte Prozentzahl der Fahrer eine Vollbremsung durchführt, eine weitere Prozentzahl nur teilweise bremst, eine wieder weitere Prozentzahl lediglich ausweicht, und ein weiterer Anteil ausweicht und bremst. Die Simulationsdatensätze, die diese Maßnahmen aufweisen, können nun alle bestimmt werden und ihre Ergebnisse entsprechend gemittelt betrachtet werden. Auf diese Weise ist es möglich, auch die Reaktionen verschiedener Fahrertypen im Rahmen des erfindungsgemäßen Verfahrens zu berücksichtigen.

Allgemein ist es selbstverständlich auch möglich, dass bei der Ermittlung der Maßnahmen andere Eigenschaften des Kraftfahrzeugs mitberücksichtigt werden, beispielsweise ein vorhandenes Bremsassistentensystem oder andere Fahrerassistenzsysteme, die Maßnahmen des Fahrers beeinflussen oder verändern. Insbesondere ist hierbei ein Bremsassistenzsystem zu nennen. Ein solches System ermöglicht es, dass unter bestimmten Bedingungen, d. h., bei bestimmten Eingaben eines Fahrers, grundsätzlich die maximal mögliche Bremsverzögerung zur Verfügung gestellt wird. Dies kann vorteilhafterweise im Verfahren berücksichtigt werden. So kann vorgesehen sein, dass das Bremsassistenzsystem durch eine Grenzbremsverzögerung berücksichtigt wird, wobei bei Überschreitung der Grenzbremsverzögerung durch die vom Fahrer initiierte Bremsverzögerung eine insbesondere straßenbelag- und/oder straßenzustandspezifische Maximalbremsverzögerung angenommen wird.

Eine besonders vorteilhafte Ausgestaltung des Verfahrens ergibt sich, wenn zusätzlich eine gewisse stochastische Streuung berücksichtigt wird. Dazu kann beispielsweise vorgesehen sein, dass in den Untersimulationen für wenigstens einen veränderten Simulationsparameter eine stochastische Verteilungsfunktion angenommen wird, wobei die Ergebnisse von Subuntersimulationen für verschiedene, um den wahrscheinlichsten Wert des Simulationsparameters entsprechend der Verteilungsfunktion verteilte Werte gewichtet werden, insbesondere die Vergleichsparameter selbst als Verteilungen und/oder als ein Mittelwert angegeben werden. Es ist dementsprechend kein fester Wert mehr für den Simulationsparameter vorgesehen, also keine feste, exakte Maßnahme, sondern eine gewisse stochastische Streuung gegeben. Dies bildet zum einen ab, dass auch in der Realität nicht immer exakte Werte vorliegen, zum anderen wird es vorteilhafterweise möglich, dass aus den Ergebnissen der Untersimulationen eine Unfallwahrscheinlichkeit ermittelt wird. Es kann also angegeben werden, mit welcher Wahrscheinlichkeit bei der entsprechenden stochastisch gestreuten Maßnahme noch ein Unfall geschieht.

In besonders vorteilhafter Ausgestaltung kann dabei zusätzlich vorgesehen sein, dass eine stochastische Verteilungsfunktion für wenigstens einen Nominalparameter angenommen wird, entsprechende Subsimulationen durchgeführt und die Ergebnisse entsprechend gewichtet zur Ermittlung einer Unfallwahrscheinlichkeit für den ursprünglichen Unfall verwendet werden. Auch der ursprüngliche Unfall kann folglich leicht variiert werden, um eine Unfallwahrscheinlichkeit zu ermitteln. Dabei kann vorgesehen sein, dass als stochastisch verteilte Nominalparameter die Geschwindigkeit des Fahrzeugs und/oder seitliche Versatz des Fahrzeugs und/oder die Position eines Kollisionsobjekts und/oder Umgebungsvariablen verwendet werden. Es wird also abgebildet, was kleinere Veränderungen für Auswirkungen auf den ursprünglichen Unfall haben. Die Unfallwahrscheinlichkeit für den ursprünglichen Unfall kann dann als Nominalparameter mit der Unfallwahrscheinlichkeit für das vorausschauende Sicherheitssystem als Vergleichsparameter zur Bewertung verglichen werden.

Für die stochastische Verteilungsfunktion kann vorgesehen sein, dass ein Simulationsparameter gauß- oder gleichverteilt mit einer bestimmten Standardabweichung angenommen wird. Grundsätzlich sind jedoch auch andere Verteilungsfunktionen denkbar, die Schwankungen oder Variationen beschreiben können.

Wird auch eine stochastische Verteilungsfunktion für Nominalparameter angenommen, kann auch vorgesehen sein, dass für alle Subsimulationen des ursprünglichen Unfalls an den Unterzeitpunkten jeweils die Untersimulationen erzeugt werden, wobei die Ergebnisse der Untersimulationen entsprechend der Verteilungsfunktion für den Nominalparameter gewichtet werden. Das bedeutet, die veränderten Einflüsse, die der Ermittlung der Unfallwahrscheinlichkeit für den ursprünglichen Unfall zugrunde liegen, werden in dieser Variante des erfindungsgemäßen Verfahren konsequent derart fortgesetzt, dass auch in den Untersimulationen diese Variation fortgeführt wird, wobei dann natürlich, um Ergebnisse zu erhalten, eine entsprechende Wichtung durchgeführt werden sollte. Auf diese Weise wird ein verbesserter Vergleich für die abschließende Bewertung erreicht.

Der abschließend erfolgende Vergleich von Vergleichsparameter und Nominalparameter bzw., wenn viele Unfälle betrachtet werden, möglicherweise auch einer entsprechenden Verteilung, dient der prognostischen Bewertung des vorausschauenden Sicherheitssystems. Dabei kann beispielsweise vorgesehen sein, dass als ein Vergleichsparameter die Kollisionsgeschwindigkeit bei einer Kollision mit einem unbewegten Kollisionsobjekt, insbesondere einem Fußgänger, oder die Relativgeschwindigkeit zum bewegten Kollisionsobjekt verwendet wird. Die Kollisionsgeschwindigkeit ist in einem gewissen Sinne ein Maß für die entstandenen Schäden.

In besonders vorteilhafter Ausgestaltung des erfindungsgemäßen Verfahrens kann jedoch vorgesehen sein, dass vorab eine einen Zusammenhang zwischen einem den Realschaden, insbesondere den Realpersonenschaden, beschreibenden Realschadenswert oder einer Realschadenswertverteilung und wenigstens einem den Fahrzustand des Kraftfahrzeugs zum Zeitpunkt des ursprünglichen Unfalls beschreibenden Nominalparameter beschreibende Referenzfunktion aus den Unfalldaten ermittelt wird, wobei nach Ermittlung des oder der Vergleichsparameter für jeden betrachteten Unfall aus der Referenzfunktion der oder die dem Vergleichsparameter zugeordnete Prognoseschadenswert oder Prognoseschadenswertverteilung ermittelt wird, woraufhin eine Bewertung durch Vergleich des Realschadenswerts oder der Realschadenswertverteilung mit den Prognoseschadenswert oder der Prognoseschadenswertverteilung erfolgt.

Die Realunfalldaten enthalten somit auch Informationen, die den angerichteten Schaden, sei es Schaden an Objekten oder an Personen, wiedergeben. Betrachtet man nun die große Anzahl der in den Realunfalldaten enthaltenen Realunfälle statistisch, so kann ein Zusammenhang ermittelt werden - die Referenzfunktion - , der beschreibt, welcher Schaden statistisch betrachtet bei welchem Wert für den Vergleichsparameter (bzw. Vergleichsparametersatz) zu erwarten ist. Dies kann über einen Schadenswert, beispielsweise einen Mittelwert, erreicht werden, aber auch über eine Schadenswertverteilung, insbesondere eine Häufigkeitsverteilung. Dieses Vorgehen hat den Vorteil, dass unmittelbare Aussagen zur Schadensreduzierung durch das vorausschauende Sicherheitssystem getroffen werden. Solche Aussagen sind einfacher sowohl den entsprechenden offiziellen Behörden als auch der Bevölkerung zu vermitteln. Es kann demnach mit dem erfindungsgemäßen Verfahren automatisch anhand der Neuauswertung von Realunfalldaten ermittelt werden, wie sich die technischen Veränderungen, also die Einführung des vorausschauenden Sicherheitssystems, auf den entstehenden Schaden auswirken.

Beispielsweise kann als Schadenswert ein die Verletzungsschwere einer am Realunfall beteiligten Person, insbesondere eines Fußgängers, beschreibender Wert, insbesondere ein MAIS-Wert, verwendet werden. Der beispielhaft genannte MAIS-Wert ergibt sich aus der AIS-Skala (Abbreviated Injury Scale) zur Klassifizierung von Verletzungen nach deren Schweregrad, die Ende der 60er Jahre als Bewertungsskala für die Mortalität von Einzelverletzungen eingeführt wurde. Es wird demnach jede Einzelverletzung entsprechend ihrer Überlebenswahrscheinlichkeit klassifiziert. Der MAIS-Wert gibt an, welcher maximale AIS-Wert bei einem Verletzten aufgetreten ist. Eine ähnliche Skala ist im Übrigen auch für Sachschäden bekannt und kann im erfindungsgemäßen Verfahren ebenso eingesetzt werden.

Zur statistischen Auswertung der Realunfalldaten kann insbesondere vorgesehen sein, dass zur Ermittlung der Referenzfunktion die relativen Häufigkeiten von diskreten oder Intervallen von Realschadenswerten für den jeweiligen Nominalparameter insbesondere durch ein Regressionsverfahren interpoliert werden. Im Beispiel der MAIS-Werte kann beispielsweise zunächst die relative Häufigkeit von MAIS-Werten für bestimmte Nominalparameter ermittelt werden. Beispielsweise erhält man eine Angabe, dass für Kollisionsgeschwindigkeiten von 60 km/h 8 % der Verletzungen gering, 13 % der Verletzungen ernsthaft usw. sind. Um die Referenzfunktion zu erhalten, die eine Beschreibung dieser Häufigkeitsverteilung für jeden möglich Wert des Nominal- bzw. Vergleichsparameters erlaubt, ist nun erfindungsgemäß eine Interpolation, insbesondere durch ein Regressionsverfahren, vorgesehen, durch die die Häufigkeitsverteilung in einen stetigen Verlauf transformiert wird.

Um eine möglichst auf einer breiten Basis von Daten basierende Aussage zu erhalten, kann vorgesehen sein, dass für jeden ursprünglichen Unfall der oder die Vergleichsparameter ermittelt werden. Dabei kann die Bewertung aufgrund eines Vergleichs von aus allen Nominalparametern und ermittelten Vergleichsparametern abgeleiteten Größen erfolgen. Im Beispiel der bereits genannten Häufigkeitsverteilungen für Schadenswerte kann so vorgesehen sein, dass eine mittlere Gesamtschadenssenkung berücksichtigt wird.

Selbstverständlich sind auch Einzelbewertungen in verschiedenen Richtungen möglich, beispielsweise können Schadenswertverteilungen bei gegebenen, nicht den Vergleichsparametern entsprechenden Realunfalldaten betrachtet werden.

Schließlich kann erfindungsgemäß vorgesehen sein, dass für mehrere mögliche Sicherheitssysteme und/oder Eigenschaften von Sicherheitssystemen eine Bewertung anhand des Verfahrens erfolgt. Wie eingangs bereits angemerkt, bietet die Datenbank von Simulationsdatensätzen ein Werkzeug, das für eine Bewertung einer Vielzahl vorausschauender Sicherheitssysteme bzw. von Eigenschaften für Sicherheitssysteme anwendbar ist. Daher können beispielsweise verschiedene geplante Ausgestaltungen von vorausschauenden Sicherheitssystemen verglichen werden und ganze Effizienzvergleiche für Klassen von vorausschauenden Sicherheitssystemen prognostisch erstellt werden.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: einen Ablaufplan des erfndungsgemäßen Verfahrens,
- Fig. 2: eine schematische Zeichnung zur Ermittlung eines Simulations- szenarios,
- Fig. 3: ein Beispiel für eine Unfallklasse,
- Fig. 4: einen Zeitstrahl zur Erläuterung relevanter Zeitpunkte,
- Fig. 5: eine Skizze zum Aktionskonzept,
- Fig. 6: eine schematische Darstellung zur Implementierung des Akti- onskonzepts aus Fig. 5,
- Fig. 7: eine schematische Darstellung zur Implementierung des Akti- onskonzepts aus Fig. 5, wobei eine stochastische Steuerung angenommen wird,
- Fig. 8: einen Graphen, der die Verteilung von Kollisionen über der Zeit anzeigt,
- Fig. 9: einen Graphen, der die Verteilung von Kollisionen für bestimm- te Kollisionsgeschwindigkeiten anzeigt,
- Fig. 10: einen die Verteilung von Vergleichs- und Nominalparameter zeigenden Graphen,
- Fig. 11: den Graphen einer Verletzungs-Risiko-Funktion als Referenz- funktion, und
- Fig. 12: ein Balkendiagramm zum Vergleich von Schadensverteilungen.

Vorab sei angemerkt, dass, obwohl sich das vorliegende Ausführungsbeispiel hauptsächlich mit Kollisionen mit einem Fußgänger sowie der Implementierung verschiedener Bremsverzögerungen als Simulationsparameter für die Untersimulationen befasst, dies die Erfindung nicht einschränkt. Zwar werden bereits in diesem Ausführungsbeispiel hervorragende Effektivitätsbewertungen möglich, jedoch kann das erfindungsgemäße Verfahren durch entsprechende Wahl des Aktionskonzepts, Genauigkeit der Simulation und eine größere Anzahl von Unter- bzw. Subsimulationen beliebig erweitert und weitergebildet werden.

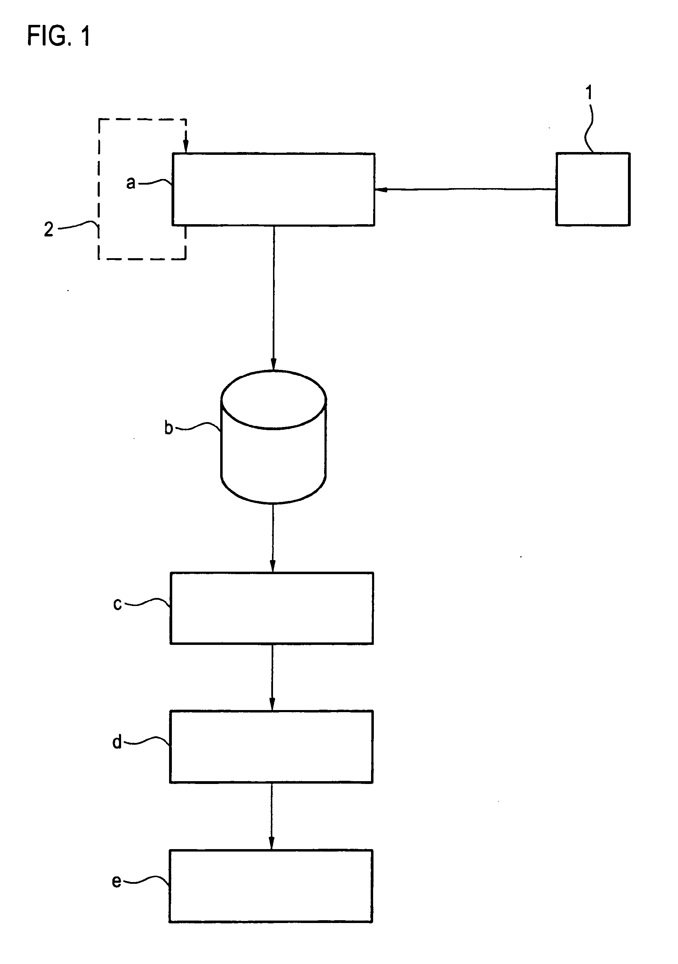

Fig. 1 zeigt einen Ablaufplan einer Ausführungsform des erfindungsgemäßen Verfahrens. Vorliegend wird eine Datenbank 1 verwendet, in der Realunfalldaten einer großen Zahl von realen, ursprünglichen Unfällen gespeichert sind, die jeweils die Kollision eines Kraftfahrzeugs mit einem Fußgänger betreffen. Darin enthalten sind als Realunfalldaten für jeden Unfall beispielsweise der MAIS-Wert, die Kollisionsgeschwindigkeit, die Bremsverzögerung, der Bremsweg, der Aufprallpunkt, die Geschwindigkeit des Kraftfahrzeugs vor Eintritt in die Unfallsituation, der Straßenbelag, der Straßenzustand sowie Informationen über die Bewegung des Fußgängers.

In einem Schritt a werden die Daten aus der Datenbank 1 mit Hilfe von Simulationen zunächst genutzt, um eine Vielzahl von Simulationsdatensätzen zu erzeugen, die die Ergebnisse von Untersimulationen zu verschiedenen Zeitpunkten sind, bei denen Simulationsparameter gemäß von Maßnahmen zur Unfallverhinderung und/oder Unfallfolgenminderung geändert wurden.

Grundlage ist also die Simulation eines ursprünglichen Unfalls, die hier als Monte-Carlo-Simulation durchgeführt wird. Der ursprüngliche Unfall kann dabei ein realer, in der Datenbank 1 durch die Realunfalldaten unmittelbar beschriebener Unfall sein, es ist jedoch auch denkbar, die Realunfalldaten der Datenbank 1 statistisch zu analysieren, um fiktive, aber äußerst realitätsnahe Unfälle selbst zu erzeugen. Im vorliegenden Ausführungsbeispiel wird die Simulation in Schritt a jedoch für jeden der in der Datenbank 1 enthaltenen realen Unfälle durchgeführt, wie durch den Pfeil 2 dargestellt wird.

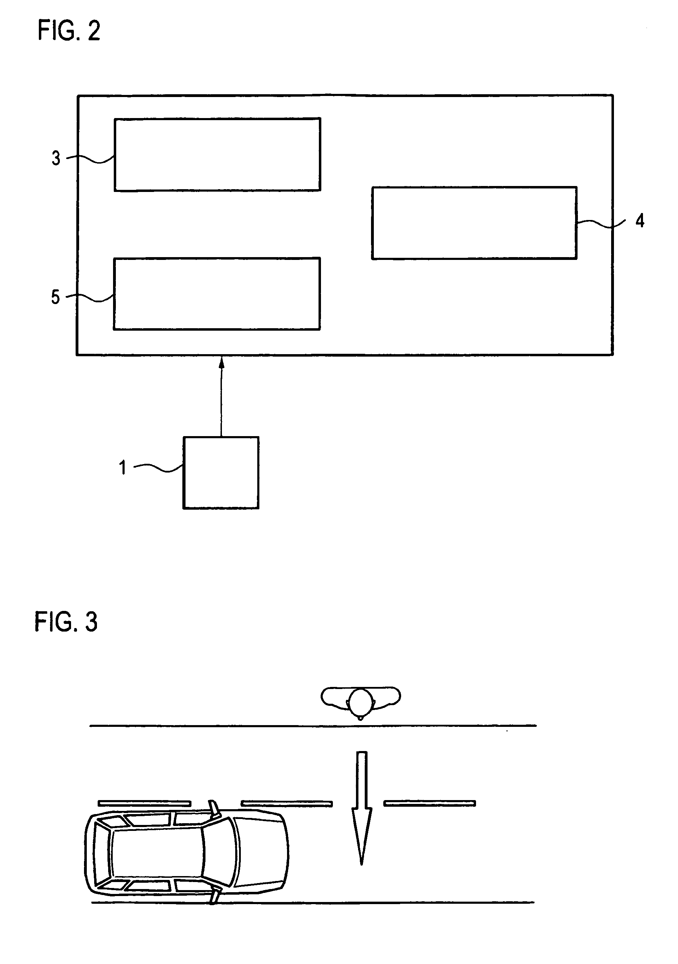

Um den ursprünglichen Unfall simulieren zu können, müssen zunächst die Realunfalldaten der Datenbank 1 in ein Simulationsszenario überführt werden, das als Ausgangspunkt für eine Simulation dienen kann. Dies ist in Fig. 2 näher dargestellt. Die ursprünglichen Unfälle lassen sich in verschiedene Klassen von Unfällen einteilen, die einen bestimmten Unfalltyp beschreiben, beispielsweise eine Kollision mit einem von links kommenden Fußgänger, wie sie schematisch in Fig. 3 dargestellt wird. Für jede dieser Unfallklassen liegen nun Simulationsvorlagen 3 vor, die, um als Simulationsszenario 4 verwendet werden zu können, durch bestimmte Nominalparameter 5 aufgefüllt werden können. Nominalparameter sind Parameter, die den ursprünglichen Unfall beschreiben. Daher wird zunächst aus den Realunfalldaten der Datenbank 1 für den ursprünglichen Unfall festgestellt, welcher Unfallklasse er angehört, welche Simulationsvorlage 3 also zu wählen ist. Sodann werden aus der Datenbank 1 die Nominalparameter abgerufen oder bestimmt, die nötig sind, die Simulationsvorlage 3 aufzufüllen. Das Ergebnis ist das Simulationsszenario 4, welches den Ausgangspunkt für die nun folgende Simulation bietet.

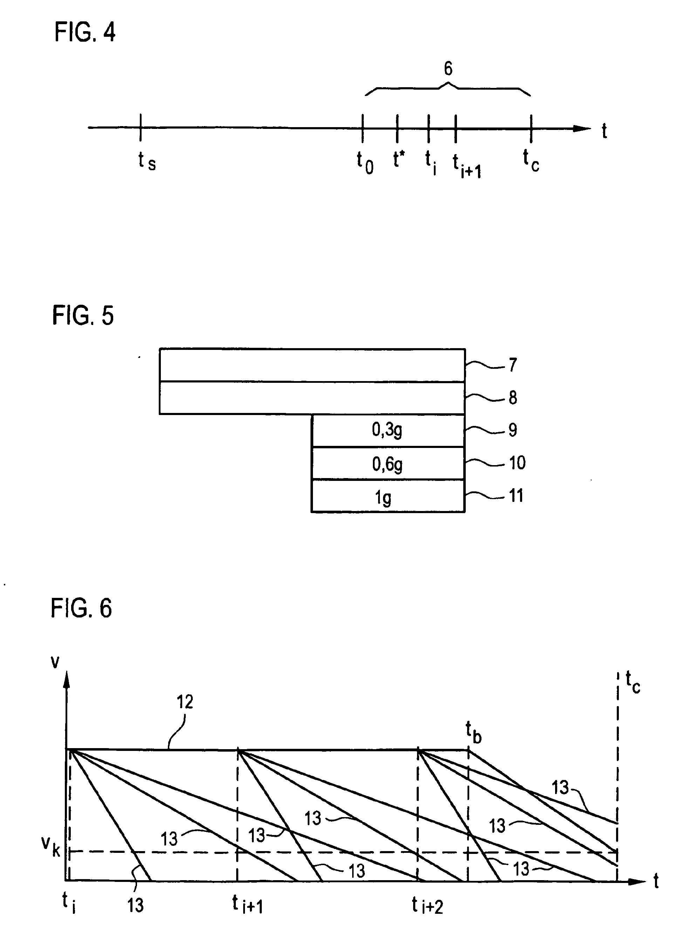

Ausgehend von dem Simulationsszenario 4 wird nun der ursprüngliche Unfall nochmals simuliert. Dabei ist nun allerdings vorgesehen, zur Ermittlung der Simulationsdatensätze im Sinne einer sogenannten inkrementellen Simulation zu verfahren. Dazu wird die Simulation des ursprünglichen Unfalls zu bestimmten Unterzeitpunkten tᵢ angehalten. Dies ist prinzipiell in dem in Fig. 4 dargestellten Zeitstrahl näher dargestellt. Zu einem Zeitpunkt tₛ startet die Simulation. Jedoch ist nicht der gesamte Zeitraum bis zum Kollisionszeitpunkt t_{c} relevant, um ein vorausschauendes Sicherheitssystem zu bewerten. Dieses hat ohnehin meist erst wenige Sekunden vor dem Unfall, hier der Kollision, die Möglichkeit, diese mit seinen Sensoren und Algorithmen zu erfassen. Daher wird ein Zeitpunkt t₀ ausgewählt, der vorliegend 4 Sekunden vor dem Kollisionszeitpunkt t_{c} liegt und als Zeitintervall einen interessierenden Bereich 6 definiert. Ab dem Zeitpunkt t₀ sind nun in regelmäßigen Abständen Unterzeitpunkte vorgesehen, von denen hier der Übersichtlichkeit halber nur die Unterzeitpunkte tᵢ und tᵢ₊₁ eingezeichnet sind. Der Abstand zwischen zwei Unterzeitpunkten beträgt 0,1 Sekunden.

Zu jedem der Unterzeitpunkte tᵢ, wobei i von 0 bis zur Zahl der Unterzeitpunkte minus Eins läuft, ist nun vorgesehen, die Simulation des ursprünglichen Unfalls anzuhalten. Ausgehend von der zu dem Unterzeitpunkt tᵢ angehaltenen Simulation des ursprünglichen Unfalls werden nun eine bestimmte Anzahl von Untersimulationen-mit veränderten Simulationsparametern gestartet und ebenso wie der ursprüngliche Unfall simuliert.

Die veränderten Simulationsparameter spiegeln Maßnahmen zur Unfallvermeidung und/oder Unfallfolgenminderung wieder, wie sie zum Zeitpunkt tᵢ, beispielsweise durch den Fahrer oder durch das vorausschauende Sicherheitssystem selber, ausgelöst werden können. Diese ergeben sich aus einem sogenannten Aktionskonzept, welches durch Fig. 5 näher erläutert wird. Dabei wird vorliegenden angenommen, dass eine Vollbremsung einer Bremsverzögerung von 1g entspricht, wobei g die Gravitationskonstante ist. Dies ist ein gängiger Wert für viele Bremssysteme, kann jedoch kraftfahrzeugspezifisch angepasst werden.

Angenommen wird weiterhin, dass das vorausschauende Sicherheitssystem, wie durch den Kasten 7 dargestellt ist, die Gefahrensituation bereits erkannt hat und einen Bremsassistenten 8 in Bereitschaft versetzt hat. Nun gibt es mehrere Möglichkeiten, wie ein Fahrer reagieren kann. Er kann zum einen vom Gas gehen, wodurch das Fahrzeug eher gering abgebremst wird. Dies ist durch den Kasten 9 dargestellt, der einer möglichen Bremsverzögerung von 0,3 g entspricht. Zudem kann er moderat bremsen, beispielsweise mit 0,6 g, was durch den Kasten 10 dargestellt ist. Eine weitere Option ist eine Vollbremsung, beispielsweise unterstützt durch das Bremsassistenzsystem 8, die einer Bremsverzögerung von 1 g entspricht und im Kasten 11 dargestellt ist. Als mögliche Maßnahmen für diesen lediglich beispielhaften Fall ergeben sich also drei Möglichkeiten, nämlich eine Bremsung mit 0,3 g, 0,6 g oder 1 g. Selbstverständlich ist es mittels des erfindungsgemäßen Verfahrens auch möglich, hier genauere Unterteilungen vorzunehmen und gegebenenfalls auch Ausweichmanöver oder dergleichen sowie automatisch durch das Sicherheitssystem initiierte Maßnahmen zu bedenken. Die hier dargestellten drei Unterfälle dienen lediglich der einfachen Darstellbarkeit.

Für jede der drei im Aktionskonzept möglichen Maßnahmen, dargestellt durch die Kästen 9, 10, 11, werden nun zu jedem Unterzeitpunkt tᵢ Untersimulationen erzeugt, wobei der Simulationsparameter der Bremsverzögerung einmal auf 0,3 g, einmal auf 0,6 g und einmal auf 1 g gestellt wird. Es wird also implementiert, dass genau zu diesem Zeitpunkt eine Bremsung beginnt. Damit nehmen diese Untersimulationen selbstverständlich einen anderen Verlauf als die Simulation des ursprünglichen Unfalls und führen zu anderen Ergebnissen, was den Unfall betrifft. Die erhaltenen Ergebnisse werden dann als Simulationsdatensatz gespeichert. Beim nächsten Unterzeitpunkt tᵢ₊₁ wird wiederum die Simulation des ursprünglichen Unfalls angehalten, es werden wiederum Untersimulationen erzeugt und Ergebnisse erhalten, die als Simulationsdatensätze gespeichert werden.

Fig. 6 erläutert das erfindungsgemäße Vorgehen unter Nutzung inkrementeller Simulationen am vorliegenden Beispiel näher. Dabei wird wiederum das Aktionskonzept aus Fig. 5 verwendet. Entlang der Abszisse ist hier die Zeit t dargestellt, die Ordinate zeigt die Geschwindigkeit v. Gezeigt sind in diesem beispielhaften und vereinfacht dargestellten Graphen, der hauptsächlich der Illustration dient, die Effekte der Untersimulationen für verschiedene Zeitpunkte tᵢ, tᵢ₊₁ und tᵢ₊₂. t_{c} markiert wiederum den Kollisionszeitpunkt. Der durchgezogene Graph 12 zeigt den Verlauf der Fahrzeuggeschwindigkeit im ursprünglichen Unfall. Offensichtlich hat der Fahrer zu einem Zeitpunkt t_{b} mit einer bestimmten Bremsverzögerung zu bremsen begonnen, ist aber dennoch mit einer Kollisionsgeschwindigkeit vₖ zum Kollisionszeitpunkt t_{c} mit einem Fußgänger kollidiert.

Zu Unterzeitpunkten tᵢ, tᵢ₊₁, tᵢ₊₂ wird nun diese Simulation des ursprünglichen Unfalls unterbrochen, und es werden Untersimulationen gestartet, in denen jeweils der Simulationsparameter der Bremsverzögerung entsprechend dem Aktionsplan aus Fig. 5 angepasst wird, also auf 0,3 g, 0,6 g und 1,0 g. Die Ergebnisse dieser Untersimulationen sind durch die an den Punkten tᵢ, tᵢ₊₁, tᵢ₊₂ abzweigenden Graphen 13 dargestellt. Es wird demnach festgestellt, welche Auswirkung die zu den Unterzeitpunkten veränderten Bremsverzögerungen, die Maßnahmen zur Unfallvermeidung und/oder Unfallfolgenminderung darstellen, gehabt hätten. Diese Informationen können dann hilfreich sein, wenn ein konkretes vorausschauendes Sicherheitssystem untersucht wird, das es erlaubt, dass diese Maßnahmen zu einem entsprechenden Unterzeitpunkt durchgeführt werden. Es ergibt sich also, dargestellt durch das Kästchen b in Fig. 1, als Ergebnis des Schritts a eine Datenbank von Simulationsdatensätzen für jeden in der Datenbank 1 enthaltenen Unfall. Die Datenbank b stellt daher ein nützliches Werkzeug für die nun folgende Bewertung konkreter vorausschauender Sicherheitssysteme dar.

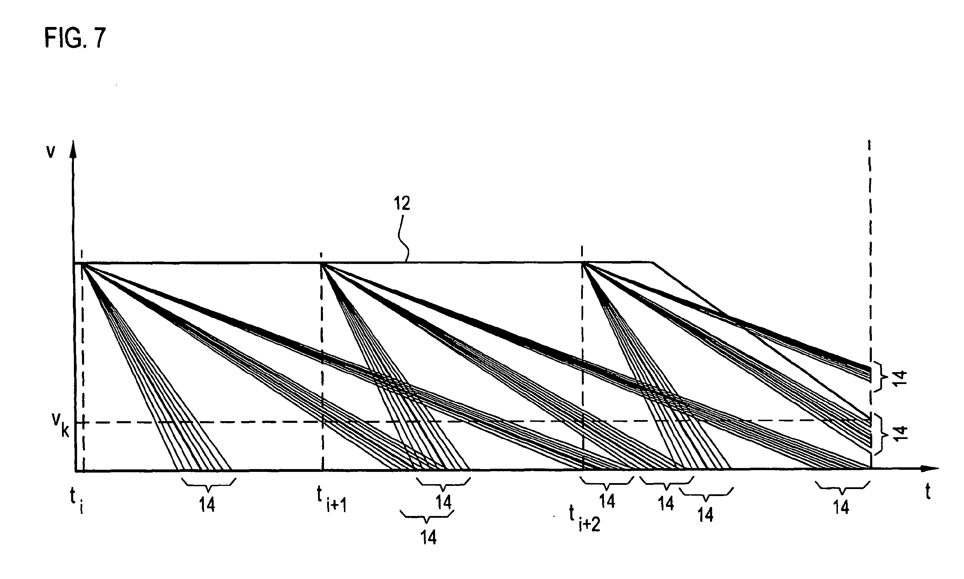

Eine Variation des erfindungsgemäßen Verfahrens in Schritt a wird durch Fig. 7 dargestellt. Dort ist nun vorgesehen, dass der veränderte Simulationsparameter nicht als scharf, sondern einer stochastischen Verteilungsfunktion, vorliegend einer Gaußfunktion folgend, angenommen wird. Das bedeutet, es wird nicht lediglich jeweils eine Untersimulation für die Werte von 0,3 g, 0,6 g und 1,0 g erzeugt, sondern eine Schar von Subuntersimulationen für um diese Werte für die Bremsverzögerung liegende Werte. Dies wird durch Fig. 7 näher erläutert. Dort ist eine Skizze entsprechend der in Fig. 6 dargestellten gezeigt, worin 12 wiederum den Graphen der ursprünglichen Simulation zeigt. Allerdings spalten sich hier nun an den Unterzeitpunkten tᵢ, tᵢ₊₁, tᵢ₊₂ für jede der Maßnahmen Scharen 14 von Graphen ab, die Ergebnisse von um die Bremsverzögerungen gestreuten Simulationsparametern für die Bremsverzögerung angeben. Diese Ergebnisse werden dann entsprechend der stochastischen Verteilungsfunktion gewichtet und als Simulationsdatensatz in der Datenbank b gespeichert. Die Verwendung einer solchen stochastischen Streuung bietet unter anderem den Vorteil, dass auch Unfallwahrscheinlichkeiten, hier also Kollisionswahrscheinlichkeiten, angegeben werden können. Dabei wird die Tatsache, ob es zu einer Kollision mit dem Fußgänger kommt, für jede der Untersimulationen einer Schar 14 entsprechend der stochastischen Verteilungsfunktion gewichtet zur Ermittlung einer Unfallwahrscheinlichkeit genutzt. Es sei an dieser Stelle angemerkt, dass, wenn ohnehin eine Vielzahl von Untersimulationen durchgeführt wird, die hinreichend dicht beieinander liegen, die Verteilungsfunktion für jede Untersimulation auch einfach über die Gesamtschar von Untersimulationen gelegt werden kann, um eine solche stochastische Streuung zu erreichen.

Hat man auf diese Weise eine Unfallwahrscheinlichkeit bzw. Kollisionswahrscheinlichkeit ermittelt, so ist es sinnvoll, wenn auch für den ursprünglichen Unfall eine solche Aussage getroffen werden kann. Dazu kann vorgesehen sein, dass auch für die Simulation des ursprünglichen Unfalls eine Streuung von Nominalparametern, beispielsweise der Geschwindigkeit des Fahrzeugs und/oder des seitlichen Versatzes des Fahrzeugs und/oder der Position eines Kollisionsobjekts und/oder der Umgebungsvariablen eingeführt wird, so dass nicht nur für die Untersimulationen entsprechende Subuntersimulationen erzeugt werden, sondern auch Subsimulationen für die Simulation der ursprünglichen Unfalls durchgeführt werden, aus denen sich analog eine Unfallwahrscheinlichkeit ergibt. Steht hinreichend Rechenleistung zur Verfügung, so kann in dem erfindungsgemäßen Verfahren auch vorgesehen sein, dass diese Streuung von Nominalparametern auch in die entsprechenden Untersimulationen übernommen wird, d. h., dass sowohl die Simulation des ursprünglichen Unfalls als auch die Subsimulation zu den Unterzeitpunkten angehalten werden, dort als Untersimulationen auch Untersubsimulationen entstehen, die dann gegebenenfalls jeweils wieder in Subuntersubsimulationen zerfallen. Diese werden dann entsprechend der Verteilung bzw. Verteilungen des Nominalparameters am Ende ebenso wieder gewichtet.

Das erfindungsgemäße Verfahren bietet hier also beliebige Möglichkeiten.

Wird auf diese Weise auch für die Simulation des ursprünglichen Unfalls eine Unfallwahrscheinlichkeit erzeugt, so kann diese als Nominalparameter später mit einem entsprechenden Vergleichsparameter verglichen werden.

Nun soll im erfindungsgemäßen Verfahren ein konkretes vorausschauendes Sicherheitssystem untersucht werden. Dafür ist nun in einem Schritt c vorgesehen, vorliegend für jeden der ursprünglichen Unfälle aufgrund der Eigenschaften des Sicherheitssystems, insbesondere von Sensoren und Algorithmen, einen Aktionszeitpunkt, zu dem Maßnahmen zur Unfallvermeidung und/oder Unfallfolgenminderung in dem Kraftfahrzeug erfolgen, und die Maßnahmen zu ermitteln. Dazu wird vorliegend wiederum die Simulation des ursprünglichen Unfalls verwendet, die ebenso als Simulationsdatensatz in der Datenbank b enthalten ist. Vorliegend wird, insbesondere anhand von Modellrechnungen für die Sensoren, zunächst für verschiedene Zeitpunkte im Verlauf der Simulation des ursprünglichen Unfalls bestimmt, welche Daten die Sensoren des vorausschauenden Sicherheitssystems gemessen hätten. Als Zeitpunkte, zu denen diese Untersuchungen stattfinden, können insbesondere auch die Unterzeitpunkte gewählt werden. Diese virtuellen, aus der Simulation des ursprünglichen Unfalls stammenden Sensordaten werden sodann in einen Algorithmus des vorausschauenden Sicherheitssystems eingegeben, der einen Kollisionsgefahrenwert bestimmt. Anhand wenigstens eines Grenzwertes für diesen Kollisionsgefahrenwert werden in dem vorausschauenden Sicherheitssystem nun diverse Maßnahmen ausgelöst, beispielsweise eine Warnung des Fahrers. Vorliegend wird ein vorausschauendes Sicherheitssystem als Beispiel betrachtet, welches lediglich eine Warnung an den Fahrer ausgeben soll. Ist also nun demnach im Verlauf der Simulation des ursprünglichen Unfalls der Zeitpunkt gefunden worden, an dem das vorausschauende Sicherheitssystem die Gefahr eines Unfalls erkennt, der sogenannte Klassifizierungszeitpunkt, wird dieser Klassifizierungszeitpunkt nun verwendet, um den Aktionszeitpunkt zu bestimmen. Dazu wird im Folgenden eine beispielsweise experimentell bestimmte Latenzzeit des vorausschauenden Sicherheitssystems bzw. von beispielsweise im Kraftfahrzeug vorgesehenen Warnmitteln hinzugezählt, zudem eine aus Daten von Fahrversuchen gewonnene Reaktionszeit des Fahrers. Erst nach Hinzufügung dieser beiden zusätzlichen Zeiten ist der Aktionszeitpunkt gefunden. Dieser ist beispielhaft in Fig. 4 als t* bezeichnet eingezeichnet.

Nun muss zusätzlich ermittelt werden, welche Maßnahmen zur Unfallvermeidung und/oder Unfallfolgenminderung der Fahrer einleiten wird. Hierzu können wiederum die Daten von Fahrversuchen genommen werden, wobei das wahrscheinlichste Verhalten des Fahrers, beispielsweise eine Bremsung mit 0,6 g, hergenommen wird. Es ist im Rahmen des erfindungsgemäßen Verfahrens auch denkbar, verschiedene Aktionszeitpunkte und verschiedene Maßnahmen in Betracht zu ziehen, beispielsweise anzunehmen, dass ein bestimmter Prozentteil der Fahrer eine Vollbremsung durchführt, ein weiterer Prozentteil mit 0,6 g bremst usw., um dann wiederum eine entsprechende Wichtung beim später folgenden Vergleich vorzunehmen. Vorliegend ist allerdings der Einfachheit halber anzunehmen, dass eine bestimmte Maßnahme zu einem bestimmten Aktionszeitpunkt durchgeführt wird.

In einem Schritt d, wiederum Fig. 1, wird dann ein in dem Unterzeitpunkt dem Aktionszeitpunkt und in den veränderten Simulationsparametern den Maßnahmen entsprechender Simulationsdatensatz ausgewählt. Im Falle einer Verteilung ist es selbstverständlich möglich, dass mehrere Simulationsdatensätze ausgewählt werden. Sollte der Aktionszeitpunkt nicht exakt einem Unterzeitpunkt entsprechen bzw. die Maßnahmen nicht genau den in der Untersimulation implementierten Maßnahmen, so wird der Simulationsdatensatz mit den entsprechend nächstliegenden Parametern ausgewählt.

Schließlich wird in einem Schritt e eine Bewertung des Sicherheitssystems durch Vergleich von wenigstens einem den durch den Simulationsdatensatz beschriebenen Simulationsunfall beschreibenden Vergleichsparameter, der aus dem Simulationsdatensatz gewonnen wird, mit einem entsprechenden Nominalparameter erreicht, Schritt e. Dabei ist der Begriff des Vergleichsparameters und des Nominalparameters hier weit zu verstehen. Gemeint sind sowohl den Unfall unmittelbar beschreibende Parameter, wie beispielsweise die Kollisionsgeschwindigkeit oder die Kollisionswahrscheinlichkeit, wie auch abgeleitete Parameter, beispielsweise aus einer Kollisionsgeschwindigkeit gefolgerte Verletzungsschweren, siehe hierzu später, oder aber, dass bei der Betrachtung von mehreren Unfällen, wie im vorliegenden Falle allen Unfällen, ganze Sätze von Vergleichsparametern bzw. daraus abgeleitete Größen mit ganzen Sätzen von Nominalparametern bzw. daraus abgeleiteten Größen verglichen werden. Entsprechend können die Schritte c und d wie auch die Schritte c - e für jeden Unfall wiederholt werden. Selbstverständlich ist es auch möglich, dass die Bewertung anhand mehrerer Vergleichsparameter erfolgt.

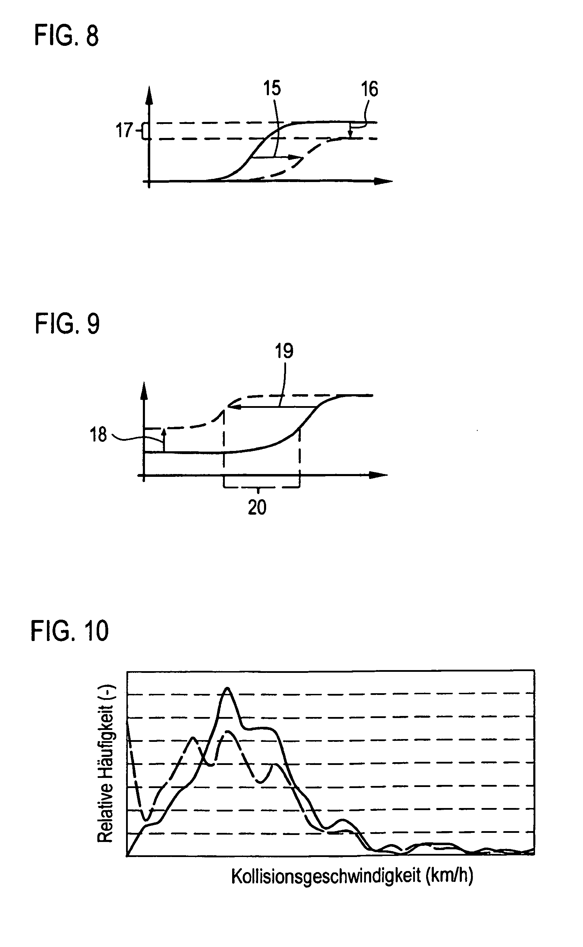

Beispiele hierzu sollen mit Hilfe der Fig. 8 - 12 nun näher erläutert werden. Die Fig. 8 und 9 betreffen zunächst eine Ausgestaltung, in der sowohl Nominalparameter in der Simulation des ursprünglichen Unfalls als nach einer stochastischen Verteilungsfunktion gestreut angenommen wurden als auch die Maßnahmen beschreibende Simulationsparameter nach einer stochastischen Verteilungsfunktion gestreut wurden, vgl. auch Fig. 7.

Fig. 8 zeigt einen Graphen, in dem die Zeit auf der Abszisse gegen die Anzahl der Kollisionen innerhalb dieser Zeit aufgetragen ist. Dabei stellt der durchgezogene Graph die Situation im ursprünglichen Unfall dar, der gestrichelte Graph die Situation mit vorausschauendem Sicherheitssystem. Aus diesem Graphen kann abgelesen werden, dass Kollisionen zum einen später passieren, Pfeil 15, aber auch weniger Kollisionen auftreten, Pfeil 16. Der Abstand 17 gibt zudem an, wie viele Kollisionen verhindert worden sind.

In Fig. 9 ist die Kollisionsgeschwindigkeit auf der Abszisse aufgetragen, die Anzahl der Kollisionen unterhalb dieser Kollisionsgeschwindigkeit auf der Ordinate. Der durchgezogene Graph stellt wiederum die Situation im ursprünglichen Unfall dar, der gestrichelte Graph die Situation unter Verwendung eines vorausschauenden Sicherheitssystems. Durch Vergleich ist ersichtlich, dass mehr Kollisionen vermieden werden, Pfeil 18, und die Kollisionen abgeschwächt werden, Pfeil 19. Der Abstand 20 gibt im Wesentlichen die mittlere Reduktion der Kollisionsschwere an.

Fig. 10 zeigt nun einen die Verteilung von Vergleichs- und Nominalparameter zeigenden Graphen. Dieser kann auch ein Ergebnis einer stochastischen Betrachtung sein, wobei dann für jeden einzelnen Unfall der Mittelwert, gegebenenfalls gewichtet, verwendet wird. Vorliegend werden die ursprünglichen Kollisionsgeschwindigkeiten mit den aus den entsprechenden Simulationsdatensätzen ermittelten Kollisionsgeschwindigkeiten verglichen. Auf der Abszisse ist die Kollisionsgeschwindigkeit aufgetragen, auf der Ordinate die relative Häufigkeit. Die durchgezogene Linie symbolisiert die Verteilung der ursprünglichen Kollisionsgeschwindigkeit, die gestrichelte Linie die Verteilung der als Vergleichsparameter ermittelten Kollisionsgeschwindigkeit. Diese Verteilungen ergeben sich unter Betrachtung sämtlicher Unfälle der Datenbank 1. Offensichtlich ist es mit dem untersuchten vorausschauenden Sicherheitssystem möglich, die Kollisionsgeschwindigkeiten sichtlich zu erniedrigen.

Bereits die Kollisionsgeschwindigkeiten ermöglichen eine Aussage zur Schadensverteilung, vorliegend insbesondere über die Verletzungsschwere eines angefahrenen Fußgängers. Allerdings ist beim vorliegenden Verfahren auch vorgesehen, eine unmittelbare Aussage über die Veränderung der Verletzungsschwere treffen zu können. Dazu wird aus den Realunfalldaten vorab, also vor oder nach Schritt a in Fig. 1, eine Referenzfunktion bestimmt, vorliegend eine Verletzungs-Risiko-Funktion. Diese Verletzungs-Risiko-Funktion beschreibt den Zusammenhang zwischen der Kollisionsgeschwindigkeit und der Häufigkeitsverteilung der MAIS-Werte. Die allgemein bekannte AIS-Skala wird durch die folgende Tabelle dargestellt:

| **AIS-Wert** | **AIS-Verletzungsschwere** |
|---|---|
| 1 | gering |
| 2 | ernsthaft |
| 3 | schwer |
| 4 | sehr schwer |
| 5 | kritisch |
| 6 | maximal (nicht behandelbar) |

Im erfindungsgemäßen Verfahren ist nun beispielhaft vorgesehen, dass die MAIS-Werte von 0 - 1, 2 - 4 und 5 - 6 jeweils zusammengefasst werden. Der MAIS-Wert ist jeweils der maximal vorkommende AIS-Wert, das bedeutet, wenn eine Person am Kopf eine AIS-3-Verletzung erleidet, an den Beinen eine AIS-2- und am Thorax eine AIS-5-Verletzung, so ergibt sich ein MAIS-Wert von 5.

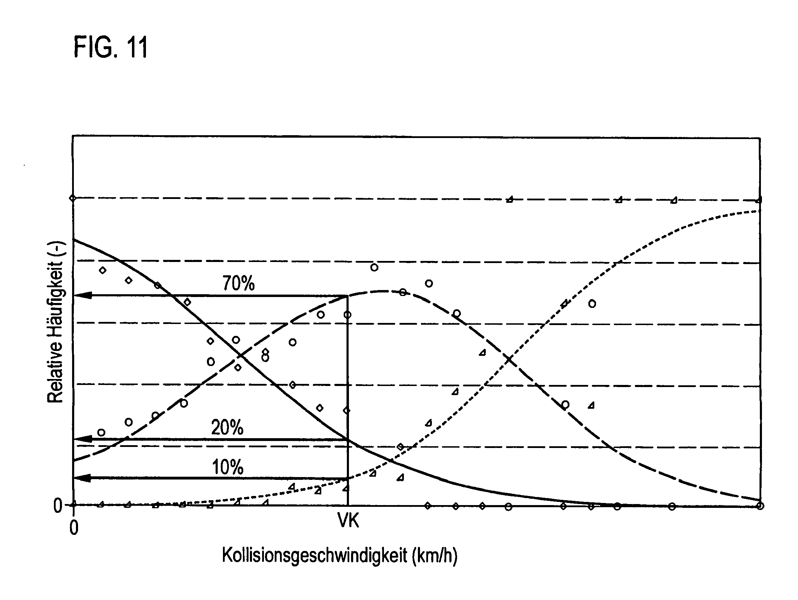

Der Zusammenhang zwischen Kollisionsgeschwindigkeit und Verletzungsschwere, also MAIS-Intervall wie oben beschrieben, wird ermittelt, indem zunächst die relativen Häufigkeiten der MAIS-Werte pro Kollisionsgeschwindigkeit über die jeweilige Kollisionsgeschwindigkeit aufgetragen werden. Dies ist beispielhaft in dem Graphen der Fig. 11 dargestellt. Darin ist auf der Abszisse die Kollisionsgeschwindigkeit aufgetragen, auf der Ordinate die relative Häufigkeit. Die mit Rauten markierten Punkte betreffen die MAIS-Werte 0 - 1, die mit Kreisen markierten Punkte die MAIS-Werte 2 - 4 und die mit Dreiecken markierten Punkte die MAIS-Werte 5 - 6. Weiter ist nun im Schritt a vorgesehen, durch Interpolation der jeweiligen Punktgruppen eine funktionale Abhängigkeit abzuleiten, die für jeden Wert der Kollisionsgeschwindigkeit zugeordnete relative Häufigkeiten ergibt. Dies geschieht vorliegend mittels eines Regressionsverfahrens, wobei als Randbedingung zu beachten ist, dass die Summe der relativen Häufigkeiten immer 100 % ergibt. Es ergeben sich schließlich die in Fig. 11 dargestellten Funktionsverläufe, wobei die durchgezogene Linie MAIS-Werten 0 - 1 entspricht, die gestrichelte Linie den MAIS-Werten 2 - 4 und die gepunktete Linie den MAIS-Werten 5 - 6. Der Graph gibt somit die Aufteilung der Verletzungsschweren für die jeweilige Geschwindigkeit an. Für die eingezeichnete Kollisionsgeschwindigkeit VK kann somit abgelesen werden, dass sich die Verletzungsschweren der in diesem Geschwindigkeitsbereich verunfallten Fußgänger zu 20 % auf eine MAIS 0 - 1-Verletzung, zu 70 % auf eine MAIS 2 - 4-Verletzung und zu 10 % auf eine MAIS 5 - 6-Verletzung aufteilen. Über die Verletzungs-Risiko-Funktion wird somit ein Zusammenhang zwischen Kollisionsgeschwindigkeit und Verletzungsschwere hergestellt.

Mit Hilfe der Verletzungs-Risiko-Funktion ist es auch möglich, für die aus den Simulationsdatensätzen ermittelten Kollisionsgeschwindigkeiten die Verletzungsschweren zu ermitteln. Dazu wird die eben ermittelte Verletzungs-Risiko-Funktion verwendet. Das Ergebnis einer solchen Untersuchung kann beispielsweise der folgenden Tabelle dargestellt werden.

| **Verletzungsschwereintervall** | **VK (Realunfalldaten)** | **VK' (Simulations datensatz)** | **MAIS-Wertverschiebung** | **Verhinderte Unfälle** |
|---|---|---|---|---|
| MAIS-Wert 0 - 1 | 41 % | 50 % | + 9 % | |
| MAIS-Wert 2 - 4 | 51 % | 43 % | - 8 % | 12 % |
| MAIS-Wert 5 - 6 | 8 % | 7 % | - 1 % | |

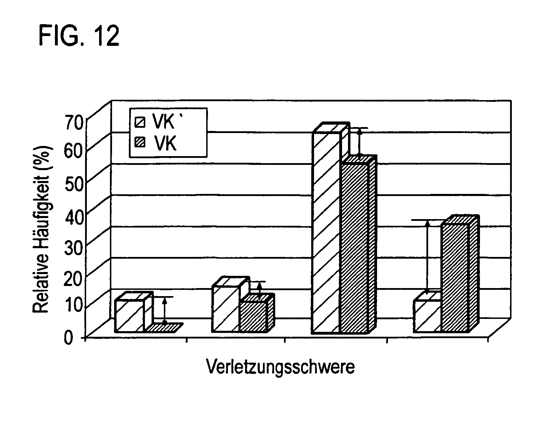

In dieser Tabelle bezeichnet VK die Kollisionsgeschwindigkeit des ursprünglichen Unfalls, VK' die unter Benutzung des vorausschauenden Sicherheitssystems aus den entsprechenden Simulationsdatensätzen ermittelte Kollisionsgeschwindigkeit. In der ersten Spalte ist aufgetragen, wie sich die Verletzungen für die Unfälle in der Datenbank 1 verhalten. Es ist ersichtlich, dass hier 41 % der Unfälle mit der Verletzungsschwere MAIS 0 - 1, 51 % mit MAIS 2 - 4 und 8 % mit MAIS 5 - 6 erfolgt sind. Die zweite Spalte zeigt die mit dem erfindungsgemäßen Verfahren prognostisch bestimmten Verletzungsschwereverteilungen bei verbautem vorausschauendem Sicherheitssystem. Da durch das vorausschauende Sicherheitssystem eine generelle Senkung der Kollisionsgeschwindigkeiten erreicht wird, vgl. auch Fig. 11, und bei niedrigen Kollisionsgeschwindigkeiten der Anteil an leichteren Verletzungen überwiegt, ergibt sich so eine Zunahme an leichteren Verletzungen und eine Verlagerung der schwereren Verletzungen in Richtung der leichteren Verletzungen. Weiter ist ersichtlich, dass in diesem Beispielsfall 12 % der Unfälle gänzlich verhindert werden können. Diese Tabelle kann auch als Balkendiagramm dargestellt werden, wie beispielsweise in Fig. 12 gezeigt.

Mit dem erfindungsgemäßen Verfahren ist es auch möglich, mehrere unterschiedliche vorausschauende Sicherheitssysteme bzw. unterschiedliche Eigenschaften oder Anforderungen an ein und dasselbe vorausschauende Sicherheitssystem zu untersuchen, indem das Vorgehen in den Schritten c - e in Fig. 1 für diese unterschiedlichen Anforderungen nochmals wiederholt wird.

## Patentansprüche

1. Verfahren zur prognostischen Bewertung wenigstens eines vorausschauenden Sicherheitssystems eines Kraftfahrzeugs unter Berücksichtigung von statistischen, mehrere Unfälle beschreibenden, insbesondere in einer Datenbank gespeicherten Realunfalldaten,
wobei vorab eine Simulation wenigstens eines realen und/oder auf den Realunfalldaten beruhenden, durch Nominalparameter beschreibbaren Unfalls durchgeführt wird, welche Simulation zu vorbestimmten Unterzeitpunkten vor einem Unfallzeitpunkt zur Erzeugung wenigstens einer Untersimulation mit wenigstens einem veränderten Simulationsparameter, wobei die Veränderung wenigstens eine Maßnahme zur Unfallvermeidung und/oder Unfallfolgenminderung in dem Kraftfahrzeug beschreibt, unterbrochen wird, und die Ergebnisse der Untersimulationen in Abhängigkeit der veränderten Simulationsparameter und der Unterzeitpunkte als Simulationsdatensätze gespeichert werden,
wonach für wenigstens einen Unfall aufgrund der Eigenschaften des Sicherheitssystems, insbesondere von Sensoren und/oder Algorithmen, ein Aktionszeitpunkt, zu dem Maßnahmen zur Unfallvermeidung und/oder Unfallfolgenminderung in dem Kraftfahrzeug erfolgen, und die Maßnahmen ermittelt werden,
ein in dem Unterzeitpunkt dem Aktionszeitpunkt und in den veränderten Simulationsparametern den Maßnahmen entsprechender Simulationsdatensatz ausgewählt wird und
eine Bewertung des Sicherheitssystems durch Vergleich von wenigstens einem den durch den Simulationsdatensatz beschriebenen Simulationsunfall beschreibenden Vergleichsparameter mit einem entsprechenden Nominalparameter erfolgt.

2. Verfahren nach Anspruch 1,
**dadurch gekennzeichnet,**
**dass** aus wenigstens einem Nominalparameter eine Unfallklasse ermittelt wird, wobei eine anhand der Unfallklasse ausgewählte Simulationsvorlage anhand wenigstens eines Teils der Nominalparameter unfallspezifisch angepasst wird und als Grundlage für die Simulation dient.

3. Verfahren nach Anspruch 1 oder 2,
**dadurch gekennzeichnet,**
**dass** in einem Zeitintervall unmittelbar vor dem Unfallzeitpunkt liegende äquidistante Unterzeitpunkte verwendet werden.

4. Verfahren nach einem der vorangehenden Ansprüche,
**dadurch gekennzeichnet,**
**dass** als Maßnahmen zur Unfallvermeidung und/oder Unfallfolgenminderung ein Bremsvorgang und/oder ein Ausweichen betrachtet werden.

5. Verfahren nach einem der vorangehenden Ansprüche,
**dadurch gekennzeichnet,**
**dass** die Simulation auch das Verhalten anderer Verkehrsteilnehmer, insbesondere eines Kollisionsobjekts, und/oder ein Umgebungsmodell berücksichtigt.

6. Verfahren nach einem der vorangehenden Ansprüche,
**dadurch gekennzeichnet,**
**dass** zur Bestimmung des Aktionszeitpunkts und/oder der Maßnahmen der Simulationsdatensatz des ursprünglichen Unfalls insbesondere im Hinblick auf die Bestimmung von Sensordaten zu verschiedenen Zeitpunkten, insbesondere den Unterzeitpunkten, bei durch den Simulationsdatensatz beschriebenen Situationen, berücksichtigt wird.

7. Verfahren nach einem der vorangehenden Ansprüche,
**dadurch gekennzeichnet,**
**dass** das Sicherheitssystem zur Warnung des Fahrers vor einem bevorstehenden Unfall, insbesondere einer bevorstehenden Kollision, ausgebildet ist, wobei der voraussichtliche Warnzeitpunkt bei der Ermittlung des Aktionszeitpunkts berücksichtigt wird.

8. Verfahren nach Anspruch 7,
**dadurch gekennzeichnet,**
**dass** eine Reaktionszeit eines Fahrers vor einer Maßnahme bei der Bestimmung des Aktionszeitpunkts berücksichtigt wird.

9. Verfahren nach Anspruch 7 oder 8,
**dadurch gekennzeichnet,**
**dass** bei der Ermittlung des Warnzeitpunkts eine Latenzzeit des Sicherheitssystems berücksichtigt wird.

10. Verfahren nach einem der vorangehenden Ansprüche,
**dadurch gekennzeichnet,**
**dass** die Maßnahmen aus Daten von Fahrversuchen ermittelt werden.

11. Verfahren nach einem der vorangehenden Ansprüche,
**dadurch gekennzeichnet,**
**dass** eine Wahrscheinlichkeitsverteilung verschiedener Maßnahmen oder Maßnahmenabfolgen bestimmt wird, wobei die den Maßnahmen entsprechenden Simulationsparameter entsprechend gewichtet berücksichtigt werden, insbesondere eine gewichtete Mittelung durchgeführt wird.

12. Verfahren nach einem der vorangehenden Ansprüche,
**dadurch gekennzeichnet,**
**dass** in den Untersimulationen für wenigstens einen veränderten Simulationsparameter eine stochastische Verteilungsfunktion angenommen wird, wobei die Ergebnisse von Subuntersimulationen für verschiedene, um den wahrscheinlichsten Wert des Simulationsparameters entsprechend der Verteilungsfunktion verteilte Werte gewichtet werden, insbesondere die Vergleichsparameter selbst als Verteilungen und/oder als ein Mittelwert angegeben werden.

13. Verfahren nach Anspruch 12,
**dadurch gekennzeichnet,**
**dass** aus den Ergebnissen der Untersimulationen eine Unfallwahrscheinlichkeit ermittelt wird.

14. Verfahren nach Anspruch 12 oder 13,
**dadurch gekennzeichnet,**
**dass** eine stochastische Verteilungsfunktion für wenigstens einen Nominalparameter angenommen wird, entsprechende Subsimulationen durchgeführt und die Ergebnisse entsprechend gewichtet zur Ermittlung einer Unfallwahrscheinlichkeit für den ursprünglichen Unfall verwendet werden.

15. Verfahren nach Anspruch 14,
**dadurch gekennzeichnet,**
**dass** für alle Subsimulationen des ursprünglichen Unfalls an den Unterzeitpunkten jeweils die Untersimulationen erzeugt werden, wobei die Ergebnisse der Untersimulationen entsprechend der Verteilungsfunktion für den Nominalparameter gewichtet werden.

16. Verfahren nach einem der vorangehenden Ansprüche,
**dadurch gekennzeichnet,**
**dass** als ein Vergleichsparameter die Kollisionsgeschwindigkeit bei einer Kollision mit einem unbewegten Kollisionsobjekt, insbesondere einem Fußgänger, oder die Relativgeschwindigkeit zum Kollisionsobjekt verwendet wird.

17. Verfahren nach einem der vorangehenden Ansprüche,
**dadurch gekennzeichnet,**
**dass** vorab eine einen Zusammenhang zwischen einem den Realschaden, insbesondere den Realpersonenschaden, beschreibenden Realschadenswert oder einer Realschadenswertverteilung und wenigstens einem den Fahrzustand des Kraftfahrzeugs zum Zeitpunkt des ursprünglichen Unfalls beschreibenden Nominalparameter beschreibende Referenzfunktion aus den Unfalldaten ermittelt wird, wobei nach Ermittlung des oder der Vergleichsparameter für jeden betrachteten Unfall aus der Referenzfunktion der oder die dem Vergleichsparameter zugeordnete Prognoseschadenswert oder Prognoseschadenswertverteilung ermittelt wird, woraufhin eine Bewertung durch Vergleich des Realschadenswerts oder der Realschadenswertverteilung mit dem Prognoseschadenswert oder der Prognoseschadenswertverteilung erfolgt.

18. Verfahren nach Anspruch 17,
**dadurch gekennzeichnet,**
**dass** als Schadenswert ein die Verletzungsschwere einer am Realunfall beteiligten Person, insbesondere eines Fußgängers, beschreibender Wert, insbesondere ein MAIS-Wert, verwendet wird.

19. Verfahren nach Anspruch 17 oder 18,
**dadurch gekennzeichnet,**
**dass** zur Ermittlung der Referenzfunktion die relativen Häufigkeiten von diskreten oder Intervallen von Realschadenswerten für den jeweiligen Nominalparameter insbesondere durch ein Regressionsverfahren interpoliert werden.

20. Verfahren nach einem der vorangehenden Ansprüche,
**dadurch gekennzeichnet,**
**dass** für jeden ursprünglichen Unfall der oder die Vergleichsparameter ermittelt werden.

21. Verfahren nach Anspruch 20,
**dadurch gekennzeichnet,**
**dass** die Bewertung aufgrund eines Vergleichs von aus allen Nominalparametern und ermittelten Vergleichsparametern abgeleiteten Größen erfolgt.

22. Verfahren nach einem der vorangehenden Ansprüche,
**dadurch gekennzeichnet,**
**dass** für mehrere mögliche Sicherheitssysteme und/oder Eigenschaften von Sicherheitssystemen eine Bewertung anhand des Verfahrens erfolgt.

## Claims

1. Method for prognostic evaluation of at least one anticipatory safety system of a motor vehicle taking into account statistical real accident data which describe a plurality of accidents and are stored, in particular, in a database,
wherein a simulation of at least one real accident and/or accident which is based on the real accident data and can be described by nominal parameters is carried out in advance, which simulation is interrupted at predetermined secondary times before an accident time in order to generate at least one secondary simulation with at least one changed simulation parameter, wherein the change describes at least one measure for avoiding accidents and/or reducing the consequences of accidents in the motor vehicle, and the events of the secondary simulations are stored as a function of the changed simulation parameters and the secondary times as simulation data records,
after which an action time, at which measures for avoiding accidents and/or reducing the consequences of accidents are implemented in the motor vehicle for at least one accident on the basis of the properties of the safety system, in particular of sensors and/or algorithms, and the measures are determined,
a simulation data record which corresponds to the action time at the secondary time and to the measures in the changed simulation parameters is selected, and an evaluation of the safety system is carried out by comparing at least one comparison parameter, which describes the simulation accident described by the simulation data record, with a corresponding nominal parameter.

2. Method according to Claim 1,
**characterized**
**in that** an accident class is determined from at least one nominal parameter, wherein a simulation template which is selected with reference to the accident class is adapted in an accident-specific fashion with reference to at least some of the nominal parameters and serves as a basis for the simulation.

3. Method according to Claim 1 or 2,
**characterized**
**in that** equidistant secondary times in a time interval directly before the accident time are used.

4. Method according to one of the preceding claims,
**characterized**
**in that** a braking process and/or an avoidance manoeuvre are considered as measures of avoiding accidents and/or reducing the consequences of accidents.

5. Method according to one of the preceding claims,
**characterized**
**in that** the simulation also takes into account the behaviour of other road users, in particular of an object with which a collision occurs and/or a model of the surroundings.

6. Method according to one of the preceding claims,
**characterized**
**in that**, in order to determine the action time and/or the measures, the simulation data record of the original accident is taken into account, in particular with regard to the determination of sensor data at various times, in particular the secondary times, in situations described by the simulation data record.

7. Method according to one of the preceding claims,
**characterized**
**in that** the safety system is designed to warn the driver about an imminent accident, in particular an imminent collision, wherein the anticipated warning time is taken into account in the determination of the action time.

8. Method according to Claim 7,
**characterized**
**in that** a reaction time of a driver before a measure is taken into account in the determination of the action time.

9. Method according to Claim 7 or 8,
**characterized**
**in that** a latent time of the safety system is taken into account in the determination of the warning time

10. Method according to one of the preceding claims,
**characterized**
**in that** the measures are determined from data relating to driving trials.

11. Method according to one of the preceding claims,
**characterized**
**in that** a probability distribution of various measures or sequences of measures is determined, wherein the simulation parameters which correspond to the measures are taken into account with corresponding weighting, in particular a weighted averaging is carried out.

12. Method according to one of the preceding claims,
**characterized**
**in that** a stochastic distribution function is adopted for at least one changed simulation parameter in the second simulations, wherein the events of sub-secondary-simulations are weighted for various values which are distributed around the most probable value of the simulation parameter in accordance with the distribution function, in particular the comparison parameters themselves are adopted as distributions and/or as a mean value.

13. Method according to Claim 12,
**characterized**
**in that** an accident probability is determined from the results of the secondary simulations.

14. Method according to Claim 12 or 13,
**characterized**
**in that** a stochastic distribution function is adopted for at least one nominal parameter, corresponding sub-simulations are carried out and the results are used with corresponding weighting for determining an accident probability for the original accident.

15. Method according to Claim 14,
**characterized**
**in that** in each case the secondary simulations are generated for all the sub-simulations of the original accident at the secondary times, wherein the results of the secondary simulations are weighted in accordance with the distribution function for the nominal parameter.

16. Method according to one of the preceding claims,
**characterized**
**in that** the collision speed in the event of a collision with an unmoving object involved in the collision, in particular a pedestrian, or the relative speed with respect to the object involved in the collision is used as a comparison parameter.

17. Method according to one of the preceding claims,
**characterized**
**in that** a reference function which describes a relationship between a real damage value which describes the real damage, in particular the real personal damage, or a real damage value distribution and at least one nominal parameter which describes the driving state of the motor vehicle at the time of the original accident is determined in advance from the accident data, wherein, after the comparison parameter or parameters has/have been determined for each accident under consideration from the reference function, the prognostic damage value or prognostic damage value distribution assigned to the comparison parameter or parameters is determined, after which an evaluation is carried out by comparing the real damage value or the real damage value distribution with the prognostic damage value or the prognostic damage value distribution.

18. Method according to Claim 17,
**characterized**
**in that** a value, which describes the severity of injury of a person involved in the real accident, in particular of a pedestrian, in particular an MAIS value, is used as the damage value.

19. Method according to Claim 17 or 18,
**characterized**
**in that**, in order to determine the reference function, the relative frequencies of discrete real damage values or intervals of real damage values are interpolated for the respective nominal parameter, in particular by means of a regression method.

20. Method according to one of the preceding claims,
**characterized**
**in that** the comparison parameter or parameters is/are determined for each original accident.

21. Method according to Claim 20,
**characterized**
**in that** the evaluation is carried out on the basis of a comparison of variables which are derived from all the nominal parameters and determined comparison parameters.

22. Method according to one of the preceding claims,
**characterized**
**in that** an evaluation for a plurality of possible safety systems and/or properties of safety systems is carried out by means of the method.

## Revendications

1. Procédé d'évaluation par pronostic d'au moins un système de sécurité à prévoyance d'un véhicule automobile en tenant compte de données d'accident réelles statistiques, décrivant plusieurs accidents, notamment enregistrées dans une base de données,
une simulation d'au moins un accident réel et/ou se basant sur les données d'accident réelles et descriptible par des paramètres nominaux étant préalablement effectuée, ladite simulation étant interrompue à des sous-instants prédéfinis avant un instant d'accident en vue de générer au moins une sous-simulation avec au moins un paramètre de simulation modifié, la modification décrivant au moins une mesure de prévention d'un accident et/ou de réduction des conséquences d'un accident dans le véhicule automobile, et les résultats des sous-simulations étant enregistrés en tant que jeux de données de simulation en fonction des paramètres de simulation modifiés et des sous-instants,
après quoi, en se basant sur les caractéristiques du système de sécurité, notamment des capteurs et/ou des algorithmes, un instant d'action auquel sont engagées les mesures de prévention d'un accident et/ou de réduction des conséquences d'un accident dans le véhicule automobile, ainsi que les mesures sont déterminés pour au moins un accident,
un jeu de données de simulation correspondant à l'instant d'action dans le sous-instant et aux mesures dans les paramètres de simulation modifiés est sélectionné et
une évaluation du système de sécurité est effectuée en comparant au moins un paramètre de comparaison qui décrit l'accident simulé décrit par le jeu de données de simulation avec un paramètre nominal correspondant.

2. Procédé selon la revendication 1, **caractérisé en ce qu'**une classe d'accident est déterminée à partir d'au moins un paramètre nominal, un modèle de simulation sélectionné au moyen de la classe d'accident étant adapté spécifiquement à l'accident au moyen d'au moins une partie du paramètre nominal et servant de base pour la simulation.

3. Procédé selon la revendication 1 ou 2, **caractérisé par** l'utilisation des sous-instants équidistants qui se trouvent immédiatement avant l'instant de l'accident dans un intervalle de temps.

4. Procédé selon l'une des revendications précédentes, **caractérisé en ce que** les mesures de prévention d'un accident et/ou de réduction des conséquences d'un accident prises en compte sont une opération de freinage et/ou un évitement.

5. Procédé selon l'une des revendications précédentes, **caractérisé en ce que** la simulation tient également compte du comportement des autres acteurs du trafic, notamment d'un objet de collision et/ou d'un modèle d'environnement.

6. Procédé selon l'une des revendications précédentes, **caractérisé en ce que** le jeu de données de simulation de l'accident initial est pris en compte pour déterminer l'instant d'action et/ou les mesures, notamment en vue de la détermination des données des capteurs à différents instants, notamment aux sous-instants, pour les situations décrites par le jeu de données de simulation.

7. Procédé selon l'une des revendications précédentes, **caractérisé en ce que** le système de sécurité est configuré pour avertir le conducteur d'un accident imminent, notamment d'une collision imminente, l'instant d'alerte probable étant pris en compte lors de la détermination de l'instant d'action.

8. Procédé selon la revendication 7, **caractérisé en ce que** le temps de réaction d'un conducteur avant une mesure est pris en compte lors de la détermination de l'instant d'action.

9. Procédé selon la revendication 7 ou 8, **caractérisé en ce qu'**un temps de latence du système de sécurité est pris en compte lors de la détermination de l'instant d'alerte.

10. Procédé selon l'une des revendications précédentes, **caractérisé en ce que** les mesures sont déterminées à partir de données d'essais de conduite.

11. Procédé selon l'une des revendications précédentes, **caractérisé en ce qu'**une distribution de probabilité des différentes mesures ou séquences de mesures est déterminée, les paramètres de simulation correspondant aux mesures étant pris en compte avec une pondération en conséquence, un calcul de la moyenne pondérée étant notamment effectué.

12. Procédé selon l'une des revendications précédentes, **caractérisé en ce qu'**une fonction de distribution stochastique est supposée dans les sous-simulations pour au moins un paramètre de simulation modifié, les résultats des sub-sous-simulations étant pondérés pour différentes valeurs distribuées autour de la valeur la plus probable du paramètre de simulation conformément à la fonction de distribution, les paramètres de comparaison eux-mêmes étant notamment indiqués comme distributions et/ou comme une valeur moyenne.

13. Procédé selon la revendication 12, **caractérisé en ce qu'**une probabilité d'accident est déterminée à partir des résultats des sous-simulations.

14. Procédé selon la revendication 12 ou 13, **caractérisé en ce qu'**une fonction de distribution stochastique est supposée pour au moins un paramètre nominal, les sous-simulations correspondantes sont effectuées et les résultats sont utilisés pondérés en conséquence pour déterminer une probabilité d'accident pour l'accident initial.

15. Procédé selon la revendication 14, **caractérisé en ce que** les sous-simulations sont respectivement générées aux sous-instants pour toutes les sous-simulations de l'accident initial, les résultats des sous-simulations étant pondérés conformément à la fonction de distribution pour le paramètre nominal.

16. Procédé selon l'une des revendications précédentes, **caractérisé en ce que** le paramètre de comparaison utilisé est la vitesse de collision lors d'une collision avec un objet de collision non mobile, notamment un piéton, ou la vitesse relative par rapport à l'objet de collision.

17. Procédé selon l'une des revendications précédentes, **caractérisé en ce qu'**une fonction de référence décrivant une interrelation entre un indice de dommage réel ou une distribution des indices de dommage réel décrivant les dommages réels, notamment les dommages corporels réels, et au moins un paramètre nominal décrivant l'état de conduite du véhicule automobile à l'instant de l'accident initial étant déterminée à partir des données d'accident, le ou les indices de dommage prévisionnel ou la distribution des indices de dommage prévisionnel associés au paramètre de comparaison étant déterminé(e)s à partir de la fonction de référence après la détermination du ou des paramètres de comparaison pour chaque accident considéré, une évaluation ayant ensuite lieu en comparant l'indice de dommage réel ou la distribution des indices de dommage réel avec l'indice de dommage prévisionnel ou la distribution des indices de dommage prévisionnel.

18. Procédé selon la revendication 17, **caractérisé en ce que** l'indice de dommage utilisé est une valeur décrivant la gravité de la blessure d'une personne impliquée dans l'accident réel, notamment un piéton, notamment une valeur MAIS.

19. Procédé selon la revendication 17 ou 18, **caractérisé en ce que** pour déterminer la fonction de référence, les fréquences relatives des indices de dommage réel discrets ou périodiques pour le paramètre nominal correspondant sont interpolées, notamment par une méthode de régression.

20. Procédé selon l'une des revendications précédentes, **caractérisé en ce que** le ou les paramètres de comparaison sont déterminés pour chaque accident initial.

21. Procédé selon la revendication 20, **caractérisé en ce que** l'évaluation est effectuée sur la base d'une comparaison de grandeurs dérivées à partir de tous les paramètres nominaux et paramètres de comparaison déterminés.

22. Procédé selon l'une des revendications précédentes, **caractérisé en ce qu'**une évaluation au moyen du procédé est effectuée pour plusieurs systèmes de sécurité et/ou propriétés de systèmes de sécurité possibles.
